Europäisches Patentamt

European Patent Office

Office européen des brevets

(10)

(11) Publication number: **0 169 642**
**B1**

# (12) EUROPEAN PATENT SPECIFICATION

(45) Date of publication of patent specification: **24.10.90**

(51) Int. Cl.⁵: **H 05 B 3/26, H 02 H 5/10**

(21) Application number: **85304058.2**

(22) Date of filing: **07.06.85**

(54) **Electrically heated panel assembly.**

(30) Priority: **14.06.84 US 620687**

(43) Date of publication of application:
**29.01.86 Bulletin 86/05**

(45) Publication of the grant of the patent:
**24.10.90 Bulletin 90/43**

(84) Designated Contracting States:
**BE DE FR GB SE**

(56) References cited:
**DE-A-2 442 924**
**DE-A-3 028 534**
**FR-A-2 143 393**
**FR-A-2 182 040**
**FR-A-2 268 425**
**FR-A-2 321 814**
**US-A-3 760 157**

(73) Proprietor: **DONNELLY CORPORATION**
**414 East Fortieth Street**
**Holland Michigan 49423 (US)**

(72) Inventor: **Bitter, Lowell Edward**
**15875 Ransom Street**
**Holland Michigan 49423 (US)**
Inventor: **Lundgren, Bryan Lunn**
**250 Cherry Court**
**South Haven Michigan 49090 (US)**

(74) Representative: **Robinson, Anthony John**
**Metcalf et al**
**Kilburn & Strode 30 John Street**
**London, WC1N 2DD (GB)**

Courier Press, Leamington Spa, England.

## Description

The present invention relates to an electrically heated panel assembly, preferably conductive window glass. More particularly though not exclusively it relates to a control system for monitoring the condition of window glass and interrupting power applied thereto in case of glass fracture.

A wide variety of electrically conductive windows have been developed which can be rapidly and effectively defogged and/or deiced. These windows are gaining wide-spread popularlity in the automotive field where rapid defogging and deicing is not only a convenience, but a safety feature greatly enhancing the safe operation of the vehicle. For example, one particularly effective electrically conductive windshield is described in European Publication EP—A—0108616, which includes a conductive thin film, and more particularly a coating of indium tin oxide, on laminated glass. Electric current is conducted through the coating to resistively heat the glass and thereby defog and deice the windshield.

Typically, electrically conductive windshields draw 5 to 15, and even 30, amps of electric current at 20 to 60 volts during heating, possibly leading to several problems if not carefully controlled. First, if the temperature of the windshield becomes excessive, the windshield could possibly delaminate upon melting of the PVB lamination material. In the above mentioned windshield, delamination could occur at approximately 65°C to 104°C (150° to 220°F). Overheating also reduces the ability of the windshield to absorb in an accident the energy of impact of a person hitting the windshield but not penetrating the windshield. Such overheating therefore impairs the intended safety features of a conventional "safety" windshield. It is known to include a temperature sensor on the windshield to detect an overheating condition and interrupt power applied to the windshield if the temperature becomes excessive. An example of such a control is described in US—A—3,790,745.

Another possible problem arising from the currents and voltages involved with electrically heated windshields is the potential electric shock to an individual striking the windshield, for example in an accident. If a vehicle occupant strikes and fractures the windshield, it is possible that the occupant will engage the electrical potential and receive injury causing shock. This possibility, though remote, is of concern in commercial deployment of the product.

Yet another possible problem arising from this applied power is the potential of local ignition and flame that might occur if the electrically heated windshield breaks and sustained power continues to be applied to the windshield for a considerable time after impact. Highly concentrated and sustained currents could cause ignition of the PVB lamination material. This may be a safety concern.

In an attempt to monitor this glass breakage, it is known to provide frangible bus bars secured to the glass. Examples are described in US—A—3,892,947 and US—A—3,524,920. Although these structures will adequately detect breakage when the bus bar is fractured, these structures do not detect relatively small centrally located window fractures or cracks, as might occur in striking a windshield. Further, these devices are not capable of detecting cracks in the conductive coating where the glass itself is not broken to the edge.

A security system sold under the mark STRATOBEL by Glaverbel of Brussels, Belgium, detects breakage of an electrically conductive window glass by moinitoring the resistance of the electrically conductive window element. So long as the glass is unbroken, the resistance of the element remains constant. When the panel is broken, the resistance of the element changes to sound an alarm. However, it is believed that this system does not disrupt the flow of current to the glass.

The aforementioned problems are alleviated or overcome in the present invention.

An electrically heated panel assembly, and a method of controlling an electrically heated panel assembly, as set out in the pre-characterising portions of independent Claims 1 to 7 is known from US—A—3 760 157.

According to the present invention an electrically heated panel assembly is characterised by those features set out in the characterising portion of Claim 1; and a method of controlling an electrically heated panel assembly is characterised by those features set out in the characterising portion of Claim 7.

The present invention uses Dc rather than Ac current for heating, allowing a cheaper assembly to be provided without the use of a triac. Control of the device is by determination of the element resistance, so enabling the heating power to be disabled easily, supplied by measuring two variables: current and voltage.

In all aspects of the present invention the panel is preferably a window panel and is preferably in the form of a coating and a preferred embodiment provides a panel with an electrically conductive coating sandwiched between two glass panels.

Preferably, the current measuring means comprises a ground resistor coupled in series with the circuit means, the ground resistor having a fixed known resistance, the voltage across the ground resistor being directly proportional to the current through the resistor and element. Preferably the calculator means or comparator means comprises a summing amp and preferably the inputs are connected across the electrically conductive element and across the ground resistor. The summing amplifier conveniently comprises a balance pot, which enables the summing amp to be factory balanced.

In a preferred embodiment the assembly includes means for sensing the temperature of the panel, the control means being further responsive to the temperature sensing means and comprising means for opening the switch means when the temperature of the panel exceeds a preselected value.

Further it is a preferable feature that the method comprises monitoring the temperature of the panel, and the interrupting step includes interrupting the power when the panel temperature assumes an undesired value.

Thus, a control circuit for an electrically conductive panel is provided which continually monitors for cracking of the conductive element by monitoring electric resistance and interrupts power applied to the element when cracking of the element is detected. Structurally, the control circuit includes a controllable switch coupled in series with the power line of the conductive panel, windshield, or window, and a circuit for determining the electrical resistance of the conductive element. So long as the element remains uncracked, the resistance of the element remains relatively constant, and the controllable switch remains closed. When the resistive element cracks, the resistance of the element changes substantially, and the controllable switch is opened to prevent further power from being applied to the element. Preferably, the resistance is determined using Ohmn's law by dividing the voltage across the element by the current passing through the element.

The control circuit of the present invention is a simple yet efficient and reliable power control for the resistively heated panel and as a window glass. Any time that cracking of the resistive coating is detected, perhaps most importantly when a vehicle occupant strikes and breaks the windshield, the power applied to the conductive coating on the panel is immediately interrupted to essentially eliminate the possibility of potential damage because of electrical power to the glass. Additionally, the device monitors for central breakage of the windshield, for example by stones thrown up from the roads, providing protection from the effects of local excessive heating due to fracture.

In a preferred embodiment of the invention, the control circuit further includes a thermostatic element operatively coupled to the heated panel for opening the controllable switch when the panel temperature becomes excessively high. When the panel is a windshield, this reduces the possibility of delamination and reduced impact energy absorption capability. The temperature control further improves the overall safety of the product.

The invention may be put into practice in various ways and one window glass power control circuit will now be described by way of example with reference to the accompanying drawings, in which:

Figure 1 is a schematic diagram showing a window glass power control circuit; and

Figure 2 is a fragmentary sectional view taken along plane II—II in Figure 1.

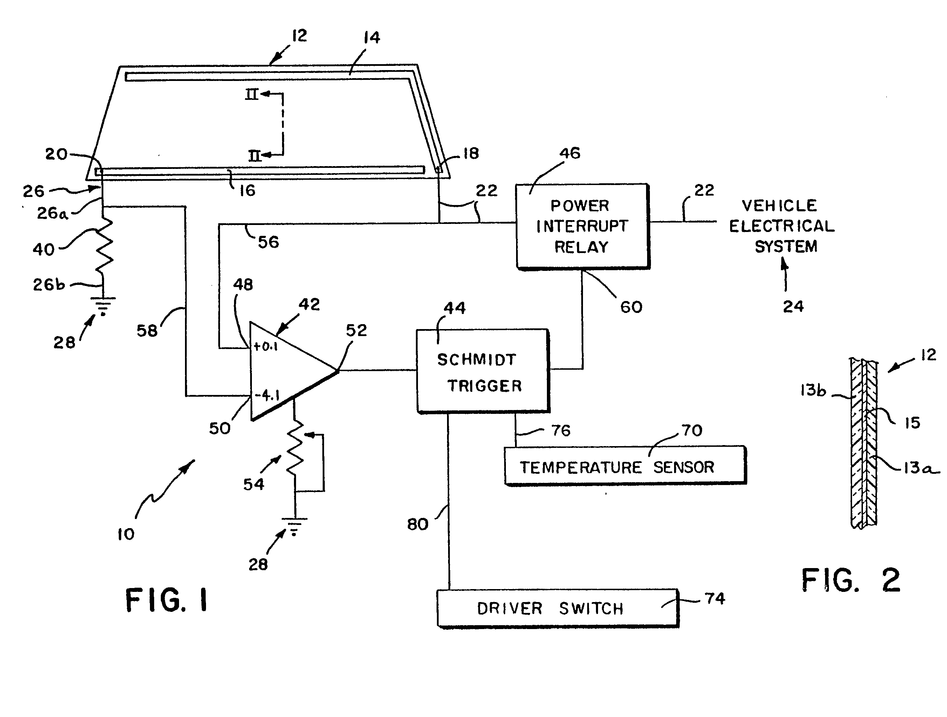

A control circuit for an electrically conductive panel such as a windshield or other window glass is illustrated in Figure 1 and generally designated 10. The circuit is shown installed on an electrically conductive windshield 12, for example of the type described in publication EP—A—0108616. THe windshield 12 includes a pair of glass layers 13a and 13b and a resistive coating 15 deposited therebetween (Figure 2). The windshield 12 further includes a pair of bus bars 14 and 16 each of which has a terminal 18 and 20, respectively (Figure 1). The bus bar 14 is arranged to extend substantially along the entire top edge and one side of the windshield, while the bus bar 16 extends along the lower edge of the windshield. Both bus bars 14 and 16 are electrically coupled to the electrically conductive coating 15 of the windshield 12. The windshield is therefore selectively heated by selectively applying power across terminals 18 and 20 so that current flows through the conductive coating. The coating is resistive causing heat buildup, which is conductively transferred to the adjacent windshield glasses 13a and 13b. In the preferred embodiment, the resistance of the coating between terminals 18 and 20 is approximately 4 ohms.

A power cable 22 extends between a vehicle electric system 24 and the terminal 18. A power cable 26 extends between the terminal 20 and the vehicle ground 28. Consequently, current may be conducted through the cables 22 and 26 to convey current from the vehicle electrical system through the electrically conductive coating 15 adhered or bonded to the windshield 12. In the preferred embodiment, the voltage applied to the cable 22 from the electrical system 24 varies between 20 and 60 volts primarily depending upon the speed of the vehicle alternator. In view of the fact that the resistance of the conductive coating on the windshield is 4 ohms, the windshield coating conducts approximately 5 to 15 amps during heating.

Crack detecting circuit 10 includes a ground resistor 40, a voltage comparator 42, a Schmidt trigger 44, and a controllable switch or power interrupt relay 46. The ground resistor 40 is coupled in series in the cable 26 between the terminal 20 and ground 28. In the preferred embodiment, the ground resistor 40 has a resistance of approximately 0.1 ohm and is a wire with specific resistance.

The voltage comparator, preferably in the form of a voltage summing amp 42, a known device, includes input terminals 48 and 50 and an output terminal 52. The summing amp 42 adds +0.1 times the voltage at the terminal 48 to −4.1 times the voltage at the terminal 50 and outputs the result on the terminal 52. The summing amp 42 further includes a balancing potentiometer or "pot" 54 enabling the amp to be balanced to zero after the control circuit 10 is installed on the windshield 12. Line 56 electrically interconnects the terminals 18 and 48. Similarly, line 58 electrically interconnects the terminals 20 and 50.

The power interrupt relay 46 in the preferred embodiment is a mechanical solenoid. Alternatively, the relay 46 could be a solid-state device or any other controllable switch. The relay 46 is coupled in series in the cable 22 and includes a control terminal 60. The relay or switch 46 is closed when current is applied to the control terminal.

The Schmidt trigger 44 is electrically coupled in series between the terminal 52 of the amp 42 and the control terminal 60 of the relay 46. Although the trigger 44 in the preferred embodiment is a Schmidt trigger, any switching or control circuit with hysteresis could be used. Preferably, the trigger 44 ignores starting transients for a period of approixmately 0.1 seconds or less after power is applied to the windshield 12.

The control circuit 10 further includes a temperature sensor 70 and a driver actuated switch 74, both of which are conventional elements. The temperature sensor 70 in the preferred embodiment is a thermistor, such as any one of those sold by DuPont, laminated between glasses 13a and 13b. Alternatively, the sensor 70 could be a surface mounted thermostat, such as any one of those sold by Elmwood Sensors, Inc., of Cranston, Rhode Island. The sensor 70 is preferably selected to actuate at approximately 65°C (150°F) to prevent delamination and to prevent significantly reduced shock absorption capabilities of the windshield 12. The driver switch 74 is coupled to the trigger 44 through a line 80 and is preferably mounted in a position readily accessible to the vehicle driver so that the switch can be easily actuated when windshield heating is desired. The sensor 70 and switch 74 are both operatively connected to the trigger 44 in conventional fashion so that the trigger is responsive to the sensor and switch.

Preferably, the control circuit 10 and the windshield 12 are installed in the vehicle as OEM equipment. Alternatively, the circuit 10 and windshield 12 can be installed in a vehicle to replace an existing nonconductive windshield. The control circuit 10 is coupled to the vehicle electrical system and the windshield 12 as illustrated in Figure 1. The only adjustment which is required after assembly is the setting of the balance pot 54 on the summing amp 42 to insure that the voltage output of the amp 42 at the terminal 52 is essentially zero when the conductive coating on the windshield 12 is uncracked (e.g., at initial installation).

So long as the conductive coating remains uncracked, the resistance of the windshield is relatively constant and in the preferred embodiment approximately 4 ohms. Although the conductive coating can be cracked by a number of objects and/or conditions, the windshield is most typically cracked either by airborne objects, such as stones, or people striking the windshield. Any cracking of the electrically conductive coating causes the coating resistance to rise and consequently the current conducted therethrough under constant voltage to fail. The condition of the conductive coating can therefore be monitored by monitoring the resistance of the coating.

In the control circuit 10, the resistance of the coating is monitored utilizing Ohm's law ($R = V/I$), whereby the voltage applied to the windshield coating is compared with the current flowing through the windshield coating. The controllable switch is opened whenever this proportion assumes an unacceptable value indicating that the resistance has significantly changed from the initial uncracked condition.

Ohm's law is implemented in the circuit 10 via the ground resistor 40 and the summing amp 42. The voltage at the terminal 20 is directly proportional to the current flowing through the windshield coating.

The voltage at the terminal 20 is equal to the resistance of the resistor 40 times the current flowing through the resistor, which is for example equal to 0.1 ohm $\times$ (V/4.1), which is equal to V/41, where V is the voltage at the terminal 18. Consequently, the voltage outputted by the summing amp 42 on the terminal 52 is equal to 0.1V (contribution at the terminal 48) minus 4.1V/41 (contribution at the terminal 50), which is essentially equal to zero so long as the resistance of the windshield coating remains relatively constant (i.e., 4 ohms). However, when the resistance rises (i.e., when the conductive coating is cracked), the output of the summing amp 42 assumes an essentially nonzero value and the Schmidt trigger 44 terminates power to the control terminal 60 of the relay 46 such that the power circuit is opened or interrupted. For example, variances of one to ten percent in the calculated resistance of the coating may be acceptable, while larger variances would be unacceptable and indicative of fracture. In the event that a vehicle occupant has struck and broken the windshield, such interruption essentially eliminates the possiblity that a voltage will be applied to that person.

Preferably, the Schmidt trigger 44 is additionally responsive to the temperature sensor 70 and the driver switch 74. More particularly, the trigger 44 will open the relay 60 if 1) the input from the summing amp 42 is essentially nonzero, 2) the driver switch 74 is open or "off", or 3) the windshield temperature is excessive (e.g., greater than 65°C (150°F)). Stated another way, the trigger 44 will close the relay 46 only if, 1) summing amp 42 outputs essentially zero, 2) the driver switch 74 is closed or "on", and 3) the windshield temperature as sensed by the sensor 70 is below 65°C (150°F).

The temperature control circuit of the present invention is a simple yet highly efficient and effective means of enhancing the safety of an electrically conductive panel such as a windshield or other glass panel. The circuit continually monitors the condition of the electrically conductive coating by monitoring the resistance of the coating, and immediately interrupts power applied to the panel coating or windshield coating if the resistance assumes an undesired value.

## Claims

1. An electrically heated panel assembly (12) including a panel (13a, 13b) having an electrically conductive element (15); circuit means (10) for conducting a heating current through the element (15); a controllable switch (46) having a control terminal (60), the switch (46) being coupled in series with the circuit means (10) and actuable between a first state in which a heating current is supplied through the conductive element (15) and a second state in which a heating current is not so supplied; the assembly being characterised by current signal means (42, 54) for providing a signal indicative of the heating current passing through the element, the heating current being DC; voltage signal means (42) for providing a signal indicative of the voltage across the element (15); calculator means (42) responsive to the current signal means (42) and the voltage signal means (42) for producing an output indicative of the resistance of the element; and control means (44, 74) responsive to the calculator means (42) and coupled to the control terminal (60) for actuating the controllable switch (46) from the first state to the second state when the resistance of the element (15) is unacceptable.

2. A panel assembly as claimed in Claim 1 in which the current signal means (42, 54) comprises a ground resistor (40) coupled in series with the circuit means (10), the ground resistor (40) having a fixed known resistance, whereby the voltage across the ground resistor (54) is directly proportional to the current through the resistor (40) and element (15).

3. A panel assembly as claimed in Claim 2 in which the calculator means comprising a summing amp (42) having inputs connected across the electrically conductive element (15) and across the ground resistor (40).

4. A panel assembly as claimed in Claim 3 in which the summing amp (42) includes a balance pot enabling the summing amp (42) to be factory balanced.

5. A panel assembly as claimed any one of Claims 1 to 4 further comprising temperature signal means (70) for providing a signal indicative of the temperature of the panel (13a, 13b), and in which the control means (44, 74) is further responsive to the temperature signal means (70) and includes means for actuating the controllable switch (46) when the panel temperature exceeds a preselected value.

6. A panel assembly as claimed in any one of the preceding claims in which the said panel (13a, 13b) is a window panel.

7. A method of controlling an electrically heated panel assembly having an electrically conductive element (15) characterised by monitoring the resistance of the conductive element (15) by monitoring the voltage applied to the conductive element and the DC current passing through the conductive element and calculating the resistance using Ohm's law; and interrupting power for heating of the conductive element when the resistance of the element assumes an undesired value.

8. A method as claimed in Claim 7 comprising monitoring the temperature of the panel (13a, 13b) and interrupting the power for heating the panel when the panel temperature assumes an undesirable value.

## Patentansprüche

1. Eine elektrisch geheizte zusammengesetzte Tafel (12) bestehend aus einer Tafel (13a, 13b) mit einem elekrisch leitenden Element (15), einer Schaltung (10), um einen Heizstrom durch das Element (15) zu leiten, einem steuerbaren Schalter (46) mit einem Steueranschluß (60), einem Schalter (46), der mit der Schaltung (10) in Serie geschaltet ist und zwischen einem ersten Zustand, in dem ein Heizstrom durch das leitfähige Element (15) zugeführt wird, und einem zweiten Zustand, in welchem der Heizstrom nicht so zugeführt wird, umschaltbar ist, wobei die Tafel gekennzeichnet ist durch eine Stromsignaleinrichtung (42, 55), um ein Signal zu liefern, das ein Maß für den durch das Element (15) fließende Strom ist, wobei der Heizstrom ein Gleichstrom ist, eine Spannungssignaleinrichtung (42), um ein Signal zu liefern, das ein Maß für die Spannung am Element (15) ist, eine Rechnereinheit (42), die auf die Stromsignaleinrichtung (42) und die Spannungssignaleinrichtung (42) ausgerichtet wird, um ein Ausgangssignal zu erzeugen, das ein Maß für den Widerstand des Elements ist, und eine Steuereinrichtung (44, 74), die auf die Rechnereinheit (42) anspricht und mit dem Steueranschluß (60) verbunden ist, um den steuerbaren (46) von dem ersten Zustand auf den zweiten Zustand umzuschalten, wenn der Widerstand des Elements (15) unbefriedigend ist.

2. Eine zusammengesetzte Tafel nach Anspruch 1, bei welcher die Stromsignaleinrichtungen (42, 54) einem Erdungswiderstand (40), der mit der Schaltung (10) in Serie geschaltet ist, wobei der Erdungswiderstand (40) einen festen, bekannten Widerstandswert hat, wodurch die Spannung am Erdungswiderstand (54) direkt proportional zum Strom durch den Widerstand (40) und das Element (15) ist.

3. Eine zusammengesetzte Tafel nach Anspruch 2, bei der die Rechnereinheit einen Additionsverstärker (42) aufweist, dessen Eingägne über das elektrisch leitende Element (15) und über den Erdungswiderstand (40) verbunen sind.

4. Eine zusammengesetzte Tafel nach Anspruch 3, bei der der Additionsverstärker (42) einen Vergleichspotentiometer aufweist, mit dem der Additionsverstärker (42) fabrikseitig einstellbar ist.

5. Eine zusammengesetzte Tafel nach einem der Ansprüche 1 bis 4, die ferner eine Temperaturefühlsignaleinrichtung (70) aufweist, um ein Signal zu liefern, das ein Maß für die Temperatur der Tafel (13a, 13b) ist, und in der Steuereinrichtung (44, 74) von der Temperaturfühlsignal-einrichtung angesteuert wird und eine Einrichtung Betätigung des steuerbaren Schalters (46) aufweist, wenn die Temperatur einen vorbestimmten Wert überschreitet.

6. Eine zusammengesetzte Tafel nach einem der vorhergehenden Ansprüche, bei der die besagte Tafel (13a, 13b) eine heizbare Fensterscheibe ist.

7. Eine Verfahren zu Steuerung einer elektrisch geheizten, zusammengesetzten Tafel mit einem elektrisch leitenden Element (15), gekennzeichnet dadurch, daß der Widerstand des leitenden Elements (15) durch die Überwachung der Spannung am leitenden Element, des durch das leitende Element fließenden Gleichstroms und das Ausrechnen des Widerstandes nach dem Ohmschen Gesetz überwacht wird, und daß der Strom für das Heizen des leitenden Elements unterbrochen wird, wenn der Widerstand des Elements einen unerwünschten Wert annimmt.

8. Eine Verfahren nach Anspruch 7, gekennzeichnet dadurch, daß die Temperatur der Tafel (13a, 13b) überwacht wird und daß der Strom zum Heizen der Tafel unterbrochen wird, wenn die Temperatur de Tafel einen erwünschten Wert annimmt.

**Revendications**

1. Ensemble panneau (12) chauffé électriquement comprenant un panneau (13a, 13b) doté d'un élément conducteur d'électric (15); un circuit (10) pour faire passer un courant de chauffage par l'élement (15); un commutateur (46) pouvant être commandé comprenant une borne de commande (60), le commutateur (46) étant couplé en série avec le circuit (10) et pouvant être actionné entre un premier état dans lequel un courant de chauffage est fourni à l'élément conducteur (15) et un second état dans lequel un courant de chauffage n'est pas fourni; l'ensemble étant caractérisé par des moyens de signalisation de courant (42, 54) destinés à fournir un signal indiquant le courant de chauffage passant par l'élément, ce courant de chauffage étant du courant continu; un moyen de signalisation de tension (42) destiné à fournir un signal indiquant la tension appliquée aux bornes de l'élément (15); un moyen de calcul (42) réagissant au moyen de signalisation de courant (42) et au moyen de signalisation de tension (42) pour produire un signal de sortie indiquant la résistance de l'élement; et des moyens de commande (44, 74) réagissant au moyen de calcul (42) commutateur réglable (46) du premier état vers le second état, lorsque la résistance de l'élément (15) est inacceptable.

2. Ensemble panneau suivant la revendication 1, dans lequel le moyen de signalisation de courant (42, 54) comprend une résistance de mise à la terre (40) couplée en série ave le circuit (10), la résistance de mise à la terre (40) présentant une valeur de résistance fixe connue, tandis que la tension dans la résistance de mise à la terre (54) est directement proportionnelle au courant traversant la résistance (40) et l'élément (15).

3. Ensemble panneau suivant la revendication 2, dans lequel le moyen de calcul comprend un amplificateur sommateur (42) doté d'entrées connectées aux bornes de l'élément conducteur d'electricité (15) et aux bornes de la résistance de mise à la terre (40).

4. Ensemble panneau suivant la revendication 3, dans lequel l'amplificateur sommateur (42) comprend un potentiomètre équilibreur au moyen duquel l'amplificateur sommateur (42) peut être équilibré en usine.

5. Ensemble panneau suivant l'une quelconque des revendications 1 à 4, comprenant en outre un moyen de signalisation de température (70) destiné à fournir un signal indiquant la température du panneau (13a, 13b), et dans lequel les moyens de commande (44, 74) réagissent en outre au moyens pour actionner le commutateur réglable (46), lorsque la température du panneau excède une valeur prédéterminée.

6. Ensemble panneau suivant l'une quelconque des revendications précédentes, dans lequel ledit panneau (13a, 13b) est une vitre.

7. Procédé pour la commande d'un ensemble panneau chauffé électriquement comportant un élément conducteur d'électricité (15) caractérisé en ce qu'on surveille la résistance de l'élément conducteur (15), en contrôlant la tension appliquée à l'élément conducteur et le courant continu passant par l'élément conducteur et en calculant la résistance au moyen de la loi d'Ohm, et on coupe le courant pour le chauffage de l'élément conducteur lorsque la résistance de l'élément atteient une valeur indésirable.

8. Procédé suivant la revendication 7, suivant lequel on saurveille le température du panneau (13a, 13b) et on coupe le courant pour le chauffage du panneau, lorsque la température du panneau atteint une valeur indésirable.

FIG. 2

FIG. I